# EUROPEAN PATENT APPLICATION

(11) **EP 2 306 691 A1**
(43) Date of publication of application: **06.04.2011**
(21) Application number: 09305917.8
(22) Date of filing: 30.09.2009
(51) Int. Cl.: H04M 1/2745

(54) **Method of and apparatus for generating an operational telephone number for establishing a communication via a telephone network from a contact number on a mobile terminal**

(71) Applicant: FRANCE TELECOM, 75015 Paris (FR)
(72) Inventor: Viot, Cédric, London, W6 OJD (GB)
(74) Representative: Cabinet Plasseraud

(57) **Abstract**

A method of and a module for generating an operational telephone number for establishing a communication via a telephone network from a contact number on a mobile terminal, comprising: reading a contact number on a mobile terminal ; determining if the mobile terminal is in a roaming situation; wherein on determining that the mobile terminal is in a roaming situation the method further comprises: identifying the country in which the mobile terminal is roaming; identifying the destination country of the intended communication to the contact number from contact data associated with the contact number; determining the country code of the destination country of the communication; and modifying the contact number according to the country in which the mobile terminal is roaming and the destination country code to provide an operational telephone number suitable for establishing a communication with the contact.

## Description

### Field of the Invention

The present invention relates in general to a method and apparatus for generating an operational telephone number for establishing a communication via a telephone network from a contact number on a mobile terminal.

### Background of the Invention

When the user of a wireless telecommunication device such as a mobile telephone, PDA (portable digital assistant), portable computer or the like wishes to establish a communication a telephone network such as a telephone call or a SMS message, with a correspondent registered with a telephone network in the country of the user, the user typically employs, in the case of a landline number for example, an area code AC, followed by the directory number DN of the correspondent. For example, for a user in the UL to establish a communication via a telephone network with a correspondent in Birmingham the caller will use the national UK prefix 0, followed by the area code for Birmingham 121, followed by the directory number DN.

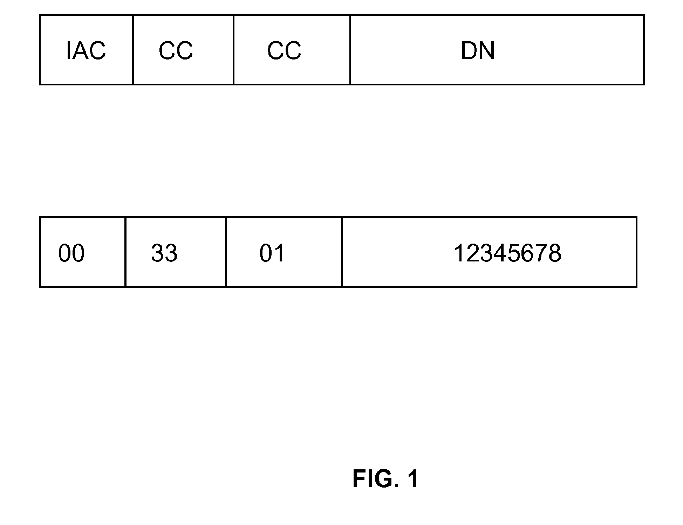

When the user of a mobile telephone wishes to establish a communication with a correspondent outside the country in which he is located, in order to provide an operational number to enable a communication to be successfully established the number should include an international access code IAC to establish a connection outside the current country, followed by a country code CO indicating the country or nation that the user wishes to reach. Following the country code the number typically includes an area or city code AC, which is then followed by the directory number DN of the correspondent as illustrated in Figure 1

For example a user in the UK wishing to establish a communication with a correspondent in Paris will firstly have to dial the IAC code for UK, 00, followed by the country code for France, 33, followed by the area code for Paris 1 and finally the dialling code of the correspondent which in France will be an eight digit number.

A user of a wireless telecommunication device typically stores contact data in an address book in the wireless telecommunication device. The contact data may be stored on the memory of the SIM card installed in the wireless telecommunication device, on a memory of the wireless telecommunication device itself or a mixture of the two. Contact data associated with a particular contact can include: the identity of the contact, a mobile telephone number, an office landline number, a home landline number, a fax number, an email address and in some cases a physical home or office address associated with the particular contact.

Typically telephone numbers of contacts in the same country as the home network of the user are saved without appending an international dialling access code IAC or a country code CC. For example the user as exemplified above is likely to record the national number of his correspondent in the address book of the mobile telephone as 0121 xxx xxxx rather than 00 44 121 xxx xxxx. The Paris contact number is likely to be saved as 00 33 1 xxxxxxxx or +33 1 xxxxxxxx.

When the user of the mobile telephone leaves the country of its home network and travels to another country outside his home network it finds itself in a roaming situation. In order to establish a communication with a correspondent located in the user's home country the user must append an international access code IAC and a country code CC to the number and remove the national prefix. For example if the user of the mobile terminal moves to France the number 0121 xxx xxxx would not be operational to establish a communication with the desired correspondent unless the international access code of France and country code of UK was appended to the number, and the national prefix 0 removed. Thus in the present example an operational number to establish communication with the desired correspondent in Birmingham would be 00 44 121 xxx xxxx. The international access code may change from country to country. While in France the international access code for making a call outside France is 00, the international access code in USA for making a call outside the USA is 011.

There is thus a need for managing telephone numbers when the user of a mobile country moves outside the country in which his wireless communication device is registered.

### Summary of the Invention

Accordingly, a first aspect of the invention provides a method of generating an operational telephone number for establishing a communication via a telephone network from a contact number on a mobile terminal, the method comprising: reading a contact number on a mobile terminal; determining if the mobile terminal is in a roaming situation; wherein on determining that the mobile terminal is in a roaming situation the method further comprises: identifying the country in which the mobile terminal is roaming; identifying the destination country of the intended communication to the contact number from contact data associated with the contact number; determining the country code of the destination country of the communication; and modifying the contact number according to the country in which the mobile terminal is roaming and the destination country code to provide an operational telephone number suitable for establishing a communication with the contact. The contact number may be stored on the mobile terminal and selected by the user or may be input by the user to the mobile terminal prior to establishing the communication.

A second aspect of the invention provides an operational telephone number generation module for generating an operational telephone number for establishing a communication via a telephone network from a contact number on a mobile terminal, the module comprising: a contact number reader for reading a contact number on a mobile terminal ; a processor operable to determine if the mobile terminal is in a roaming situation and to identify the country in which the mobile terminal is roaming; identify the destination country of the intended communication to the contact number from contact data associated with the contact number and to determine the country code of the destination country of the communication; and a number modifier to modify the contact number according to the country in which the mobile terminal is roaming and the destination country code to provide an operational telephone number suitable for establishing a communication with the intended contact.

A third aspect of the invention provides a wireless telecommunication device comprising: a transceiver for communicating with a network entity; and an operational telephone number generation module according to the second aspect of the invention

In embodiments of the invention the method may include or the module may be operable to implement the following features:
■ comparing the MCC of the home network of the mobile terminal with the MCC of the current location of the mobile terminal to determine if the mobile terminal is in a roaming situation.
■ the contact number may be stored in a dataset of contact data including contact data of one or more contacts; and wherein the country of the call destination is determined by reading the country in an address field of the contact data associated with the contact number.
■ the destination country of the intended communication may be determined by checking the number of digits of the contact number.
■ the destination country of the intended communication may be determined by checking the initial digits of the contact number.
■ the method may include or the module may be operable for checking the number of digits of the modified contact number to determine if the number of digits corresponds to the number of digits of an operational telephone number enabling a communication from the country in which the terminal is roaming to the destination country of the intended communication.
■ a dataset including a country, the respective country code, the standard length of telephone numbers in the respective country, and standard prefixes of telephone numbers in the respective country may be stored on the mobile terminal

The methods according to the invention may be computer implemented. The methods may be implemented in software on a programmable apparatus. They may also be implemented solely in hardware or in software, or in a combination thereof.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1 is a schematic diagram of an example of the structure of an operational telephone number
Figure 2 is a block diagram indicating some components of a wireless communication device according to at least one embodiment of the invention;
Figures 3A to 3D are schematic diagrams illustrating example of the structure of contact data stored on a mobile telephone;
Figure 4 is an example of a country telephone number match dataset according to an embodiment of the invention;
Figure 5 is a general schematic diagram of a mobile terminal in contact with a home telecommunication network and accessing by roaming a foreign telecommunication network according to at least one embodiment of the invention; and
Figure 6 is a flow chart of a method of generating an operational telephone number according to a first embodiment of the invention.

### Detailed description

An embodiment of a method of generating an operational telephone number, of the invention will be described with reference to Figures 1 to 5.

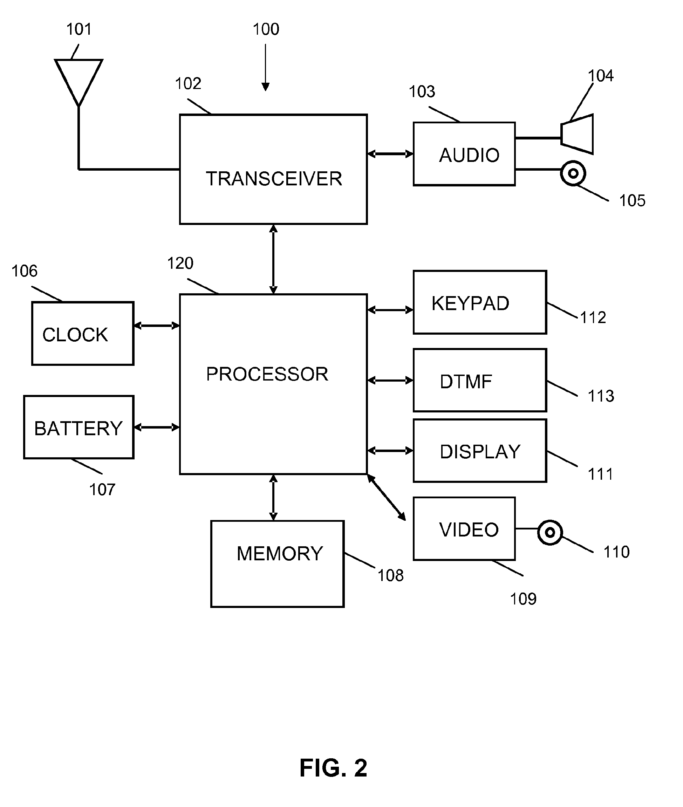

Figure 2 illustrates some of the main components of a non-limiting example of a wireless communication device 100 that may be used in the context of the invention. The wireless communication device 100 comprises conventional circuitry for performing the main functions of a mobile phone and includes one or more antennas 101 and a transceiver unit 102 for the transmission and reception of wireless signals; an audio unit 103 with a speaker 104 and a microphone 105; a clock 106; a battery 107; a memory 108, a video unit 109 with camera 110 for capturing still and/or video images, a display screen 111 for displaying information to the user, a keypad for receiving a user input 112 and a DTMF (dual tone multi frequency) processing unit 113 and a processor 120. The wireless communication device may include further units such as a GPS unit for indicating the geographical location of the wireless communication device and other such units included in mobile wireless communication devices.

In some embodiments of the wireless communication device the display screen 111 may be a touch sensitive screen and the keypad 112 may be a virtual keypad displayed on the touch sensitive screen. The memory 108 may include one or more memory circuits including non-volatile memory circuits (EEPROM, FLASH etc.)

The wireless communication device 100 may be a mobile telephone or any other wireless telecommunication device providing to its user telecommunication services in which a correspondent can be contacted by means of a contact telephone number via a Public Land Mobile Network (PLMN) and where appropriate a Public Switch Telephone Network (PSTN). Depending on the capabilities of the wireless communication device and the supporting telecommunication networks the wireless communication device 100 may provide a range of voice and data communication services. As non-limiting examples the illustrated wireless communication device provides telephone network based communication services including voice, multimedia and text messaging,

In the non-limiting example illustrated in Figure 2 the wireless communication device 100 is a mobile telephone in which contacts details of a number of correspondents are stored in the memory of the mobile telephone. It will be appreciated that the contact data may be stored in the memory of the mobile telephone itself and/or on a SIM card present in the mobile telephone.

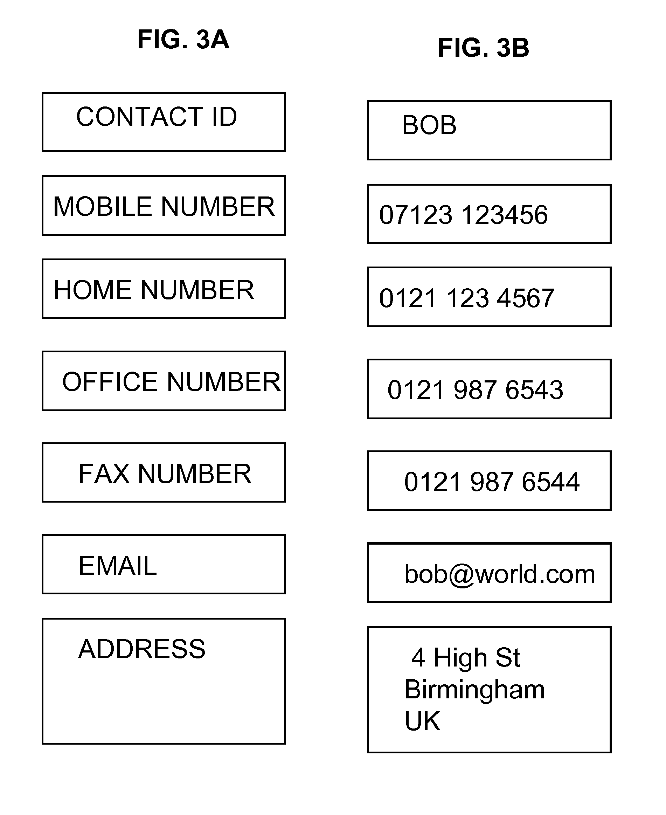

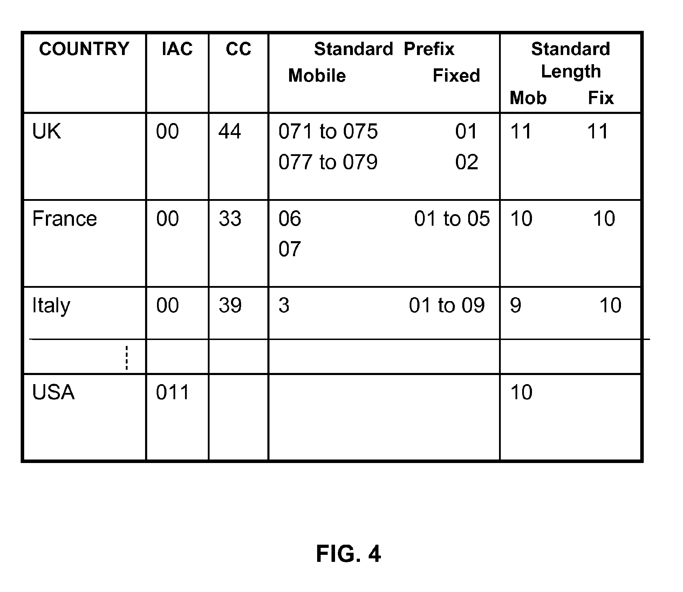

Contact data associated with a particular contact can, as schematically illustrated in Figures 3A to 3D include data fields storing the identity of the contact, CONTACT ID, a mobile telephone number, MOBILE NUMBER, a home landline number, HOME NUMBER, an office landline number, OFFICE NUMBER, a fax number, FAX NUMBER, an email address EMAIL and in some cases a physical home or office address, ADDRESS associated with the particular contact. In addition, a country match data set enabling the implementation of the method of the embodiment of the invention is stored in the memory of the mobile telephone 100. Such a dataset provides an intelligent match between multiple countries and telephone numbers of mobile telephones and landlines corresponding to each country. For example with reference to Figure 4 the dataset includes an identification of the country, the IAC and CC associated with each country, standard prefixes for mobile telephone numbers and fixed telephone lines in the respective country, and the standard number of digits of telephone numbers in the corresponding country. For example for the UK, the IAC code is 00 and the country code is 44. Typically mobile numbers in the UK commence with the digits 071 to 078, or 077 to 079. Landlines typically start with the digits 01 or 02 depending on the area code. For example a Birmingham landline telephone number will commence with the digits 0121, while a London landline telephone number will commence with the digits 020. The standard number of digits of a telephone number in the UK including the national prefix 0 is 11 digits. In France, for example a typical mobile number commences with digits 06 or, from 2010 07, while landline numbers commence with the digits 01 to 05, depending on the area code. For example a landline number in Paris will commence with the digits 01 while a landline number in Bordeaux will commence with digits 05. The standard length of a telephone number in France is 10 digits.

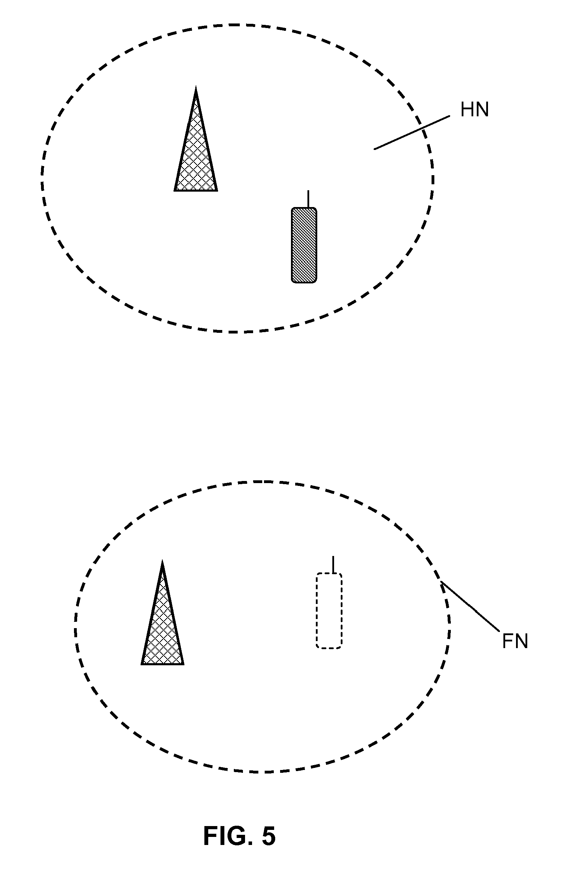

In the exemplary example of illustrated in Figure 5 the mobile telephone is provided with a SIM card with a dedicated MCC (mobile country code)/NCC(network country code) identifying the home network of the mobile telephone.

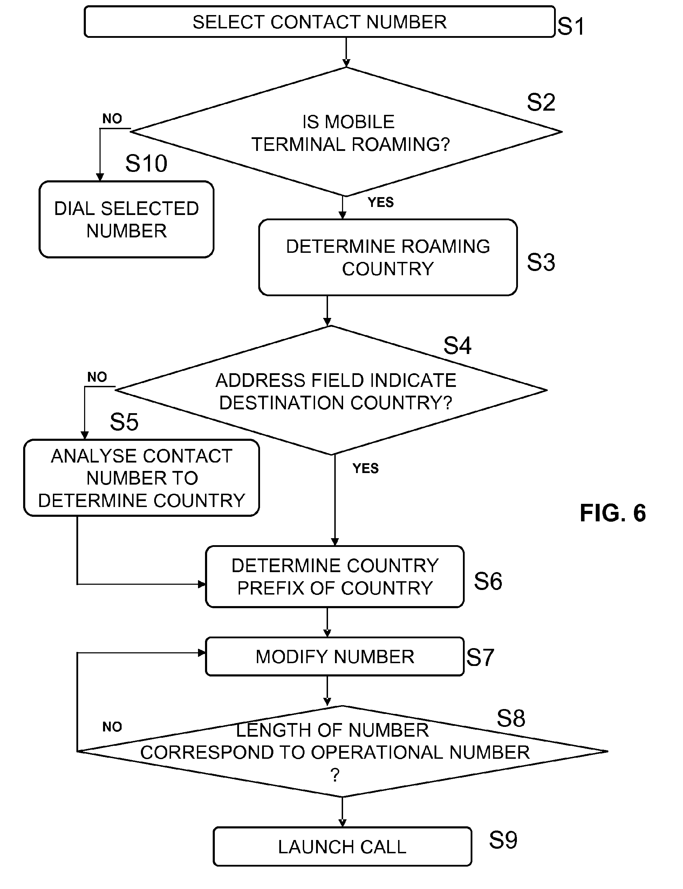

Figure 6 is a flow chart of a method of providing an operational telephone number to establish a communication via a telephone network according to an embodiment of the invention. When the mobile telephone is located in his home country, for example the UK, to call contact Bob, the user, in step S1, selects "Bob" from the address book and can further select, depending on the design of the mobile handset, the mobile number associated with Bob If a contact ID has only one telephone number associated with it the number can be selected automatically on selecting the contact ID. In step S2 the home country code MCC/NCC of the mobile terminal of the user is compared with the MCC/NCC of the telecommunication network with which the mobile terminal of the user has telecommunication contact. In this case since the mobile terminal is located in the country of its home network the MCC/NCC parameters of the home network match the MCC/NCC parameters of the current network and the process proceeds to S10 in which the pre-stored mobile number "07123 123456" is then used to make the telecommunication connection to Bob. Because the user is located in the UK no international access code not country code are needed to establish the communication.

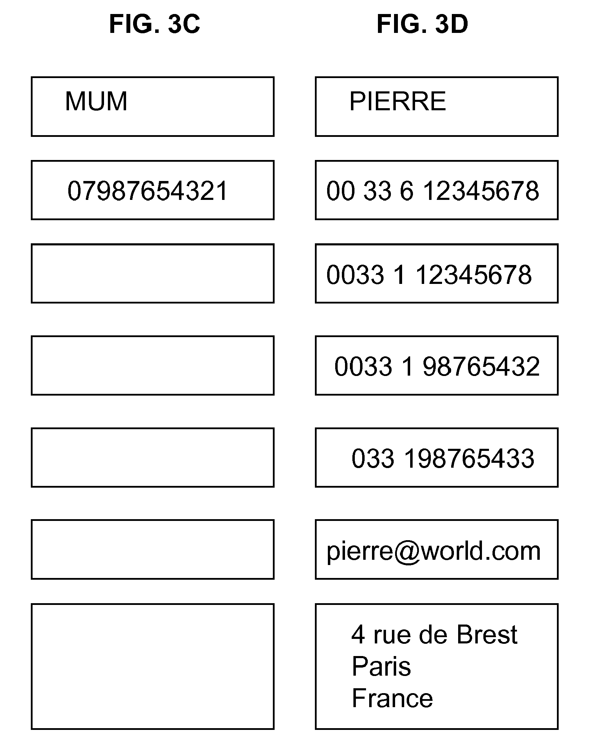

If the user wishes to contact a correspondent located outside the UK such as Pierre with exemplary contact details as depicted in FIG. 3D, the pre-stored number "00 33 6 12345678" can be used in step S10, after it is determined that the mobile is not roaming, to successfully establish the connection. In this case the lAC 00 and the CC 33 stored with the directory number in the contact dataset are required for a successful connection.

If the user leaves the UK and travels to a country outside the UK, such as France, the mobile telephone enters a roaming situation. In France the wireless communication device 100, when activated, has access to a network provider FN outside its home territory.

With reference again to Figure 6, the user of the mobile telephone wishes to call a contact identified as "Bob". In step S1, the mobile number of Bob as stored in the address book of the mobile telephone is selected. In step S2 the MCC/NCC parameters of the home network of the user's mobile terminal is compared with the MCC/NCC parameters of the telecommunication network in France FN with which the mobile terminal 100 has telecommunication contact. In this case the MCC/NCC parameters of the detected network do not match the MCC/NCC parameters of the home network and it is thus determined that the mobile telephone is outside its home country in a roaming situation. In step S3 from the MCC/NCC parameters of the detected telecommunication network FN the country in which the mobile telephone is located is identified - in this exemplary case France. In step S4 the address field of the contact data associated with Bob as illustrated in Figure 3B is checked for an indication of the country in which Bob is located. In this case since UK is indicated in the address field of the contact data, it is determined that the destination of the intended call is the UK. In step S6 the prefix 44 required for making an international call to the UK is retrieved from the country match data table of Figure 4. Since it was determined in step S3 that the country from which the call to be made is France the international access code 00 is used. The prefix 0 from the pre-stored number "07123 123456" is removed, and the required international access code 00 and country code 44 are added to the pre-stored contact number in step S7 to provide an operational telephone number for establishing a successful telecommunication connection to a UK number from France. A modified number "00 44 7123 123456" is thereby automatically provided to make the call. In step S8 the length of the modified number is checked to determine if it corresponds to the length of an operational telephone number to establish a successful communication from France to the UK. In the example given the number of digits of the telephone number should be 14 to include a 2 digit IAC from France, a 2 digit country code CC to the UK and a 10 digit mobile telephone number in the UK excluding a 1 digit national prefix "0". The call to the operational modified number is then launched in step S9 without the need from any manual intervention to append or remove prefixes from the user.

In some cases the stored contact data may not include the physical address associated with the contact. For example with reference to FIG. 3C the user of the mobile telephone may wish to make a telephone call or send a SMS message to a contact identified as "Mum". With reference again to Figure 6, the user selects from the contact data stored on the mobile telephone, the contact number "07987654321" associated with the contact "Mum". In step S2 by comparing the MCC/NCC parameters of the detected telecommunication network FN with the home network parameters MCC/NCC it is determined that the mobile telephone is in a roaming situation. In step S3 from the MCC/NCC of the detected network it is determined that the mobile telephone is located in France. In step S4 the address field of the contact data of contact "Mum" is checked to verify if the destination country of the intended communication is indicated. In the present example the address field is empty and thus the country to which the communication is to be made cannot be determined by means of the address field. The process thus proceeds to step S5 where the pre-stored contact number is analysed to determine the destination country of the intended communication. In the present case the selected number is "07987654321" The total number of digits making up the contact number is identified as being 11 which with reference to Figure 4 corresponds to the standard length of a telephone number in the UK. The initial digits of the telephone number are also identified as being 079 which correctly corresponds to a standard prefix of a mobile telephone number in the UK. The destination country of the intended communication is thus determined to be the UK and the country code for the UK is identified from the country match dataset in step S6 as being 44. In step S7 the pre-stored contact number "07987654321" is modified by removing the national prefix "0" and appending the international access code for calling from France "00" and the UK country code "44" to provide a modified number "00 44 7987654321". In step S8 the length of the modified number is checked to verify that it contains the correct number of digits to make a communication from France to the UK. If the telephone number contains the correct number of digits the call is launched in step S9 thereby allowing an operational communication to be made by simply selecting the intended contact and automatically correcting the number so that a successful communication can be established.

The methods according to the embodiments of the invention may be initiated on pressing the call/send button of the telephone. The selected number is intercepted to be read and automatically modified if necessary before sending the number to establish the communication. Alternatively the method may be initiated on selection of the number prior to pressing the call/send button. The modified contact number may be displayed for validation by the user before the number is sent to establish the communication.

The method according to the embodiments of the invention can find applications in different telecommunication access networks such as 2G, 3G, 4G, wifi and Fermto Cell technology coverage.

Methods according to embodiments of the invention enable a telephone for establishing a communication via a telephone network to be automatically corrected before attempting to establish a communication.

Although the present invention has been described hereinabove with reference to specific embodiments, the present invention is not limited to the specific embodiments, and modifications will be apparent to a skilled person in the art which lie within the scope of the present invention.

For instance, while the foregoing examples may be used to make a telephone call, to send a SMS message or to send a fax, for example. Moreover while examples have been given for contact numbers stored on the mobile terminal it will be appreciated that embodiments of the invention may be applied to telephone numbers which are not pre-stored on the mobile terminal but are input manually by the user before the intended communication is initiated. Moreover when analysing the contact number in order to determine the destination country of the intended communication the number of initial digits of the contact number may vary depending on the contact number.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of generating, from a contact number on a mobile terminal, an operational telephone number for establishing a communication via a telephone network, the method comprising:
intercepting a contact number on a mobile terminal;
determining if the mobile terminal is in a roaming situation; wherein on determining that the mobile terminal is in a roaming situation the method further comprises:
identifying the country in which the mobile terminal is roaming;
identifying the destination country of the intended communication to the contact number from contact data associated with the contact number;
determining the country code of the destination country of the communication; and
modifying the contact number according to the country in which the mobile terminal is roaming and the destination country code to provide an operational telephone number suitable for establishing a communication with the contact.

2. A method according to claim 1, wherein determining if the mobile terminal is in a roaming situation comprises comparing MCC/NCC parameters of the home network of the mobile terminal with the MCC/NCC parameters of the current network detected by the mobile terminal.

3. A method according to claim 1 or 2 wherein the contact number is stored on the mobile terminal in a dataset of contact data including contact data of one or more contacts; and wherein the country of the call destination is determined by reading the country in an address field of the contact data associated with the contact number.

4. A method according to any one of the preceding claims wherein the destination country of the intended communication is determined by checking the number of digits of the contact number.

5. A method according to any one of the preceding claims wherein the destination country of the intended communication is determined by checking the initial digits of the contact number.

6. A method according to any one of the preceding claims further comprising checking the number of digits of the modified contact number to determine if the number of digits corresponds to the number of digits of an operational telephone number enabling a communication from the country in which the terminal is roaming to the destination country of the intended communication.

7. A method according to any one of the preceding claims further comprising the preceding step of storing on the mobile terminal a country match dataset including a country identifier, the respective country code, the standard length of telephone numbers in the respective country, and standard prefixes of telephone numbers in the respective country.

8. An operational telephone number generation module for generating an operational telephone number for establishing a communication via a telephone network from a contact number on a mobile terminal, the module comprising:
a contact number interceptor for intercepting a contact number on a mobile terminal;
a processor operable to
determine if the mobile terminal is in a roaming situation and to identify the country in which the mobile terminal is roaming;
identify the destination country of the intended communication to the contact number from contact data associated with the contact number and to determine the country code of the destination country of the communication; and
a number modifier to modify the contact number according to the country in which the mobile terminal is roaming and the destination country code to provide an operational telephone number suitable for establishing a communication with the intended contact.

9. An operational telephone number generation module according to claim 8, wherein the processor is operable to compare the MCC/NCC parameters of the home network of the mobile terminal with the MCC/NCC parameters of the current detected network of the mobile terminal.

10. An operational telephone number generation module according to claim 8 or 9, wherein the contact number is stored in a dataset of contact data including contact data of one or more contacts; and wherein the processor is operable to identify the destination country of the intended communication by reading the country in an address field of the contact data associated with the contact number.

11. An operational telephone number generation module according to any one of claims 8 to 10, wherein the processor is operable to identify the destination country of the intended communication by checking the number of digits of the contact number.

12. An operational telephone number generation module according to any one of claims 8 to 11, wherein the processor is operable to identify the destination country of the intended communication by checking the initial digits of the contact number.

13. An operational telephone number generation module according to any one of claims 8 to 12 wherein the processor is operable to check the number of digits of the modified contact number to determine if the number of digits corresponds to the number of digits of an operational telephone number enabling a communication from the country in which the terminal is roaming to the destination country of the intended communication.

14. An operational telephone number generation module according to any one of claims 8 to 13 further comprising a memory for storing a country match dataset including a country identifier, the respective country code, the standard length of telephone numbers in the respective country, and standard prefixes of telephone numbers in the respective country.

15. A wireless telecommunication device comprising:
a transceiver for communicating with a network entity; and
an operational telephone number generation module, according to any one of claims 8 to 14 for generating an operational telephone number for establishing a communication via a telephone network from a contact number on a mobile terminal.
